# FASCICULE DE BREVET EUROPEEN

(11) **EP 1 547 891 B1**
(45) Date de publication et mention de la délivrance du brevet: **07.02.2007**
(21) Numéro de dépôt: 04292851.5
(22) Date de dépôt: 02.12.2004
(51) Int. Cl.: B60T 13/58, B60T 13/74, B60T 7/04

(54) **Commande de freinage d'un véhicule électrique avec récupération d'énergie**
Elektrofahrzeugbremssteuerung, mit Energieregenerierung
Electric vehicle brake control, with energy recuperation

(30) Priorité: 23.12.2003 FR 0315268
(43) Date de publication de la demande: 29.06.2005
(73) Titulaire: GIAT Industries, 78000 Versailles (FR)
(72) Inventeur: Pape, Olivier, 78230 Le Pecq (FR); Vagner, Alain, 75002 Paris (FR)
(74) Mandataire: Célanie, Christian

(56) Documents cités:
- GB-A- 2 325 285
- US-A- 4 691 148
- US-A- 5 472 264
- US-A- 6 076 899
- US-B1- 6 378 636

## Description

Le secteur technique de la présente invention est celui des dispositifs de freinage d'un véhicule équipé d'un moteur électrique.

De plus en plus de véhicules comportent un moteur électrique alimenté soit par des batteries d'accumulateurs, soit par un groupe électrogène embarqué (véhicule hybride). De tels moteurs ont l'avantage d'être réversibles, c'est à dire qu'ils sont capables de produire de l'énergie électrique lorsqu'ils ne sont plus alimentés en courant mais qu'ils sont entraînés en rotation par le mouvement du véhicule.

Ainsi, il est connu d'utiliser cette propriété pour recharger les batteries d'alimentation du moteur lorsque le conducteur relâche la pédale d'accélérateur. Le couple résistant appliqué aux roues par le moteur est alors programmé pour être variable en fonction de la vitesse du véhicule, avec une diminution progressive jusqu'à l'annulation complète lorsque la vitesse du véhicule est faible (simulation d'un frein moteur puis d'un débrayage). Le freinage est quant à lui classiquement réalisé de manière mécanique.
Un inconvénient majeur de l'état actuel de la technique demeure justement dans le fait que l'appui sur la pédale de frein doit être ajusté par le conducteur pour compenser la variation du couple de freinage en fonction de la vitesse, pour obtenir une décélération constante. C'est notamment le cas pour les véhicules de masse importante (par exemple les poids lourds) qui doivent maintenir une vitesse constante dans une pente de longue distance.
Un autre inconvénient de l'état actuel de la technique demeure dans le fait que le freinage mécanique n'est pas immédiat et intervient brutalement.
Le but de la présente invention est de fournir un dispositif de freinage restituant une décélération directement proportionnelle à l'appui sur la pédale de frein, en associant freinage électrique et freinage mécanique et en privilégiant la récupération d'énergie, quelle que soit la vitesse du véhicule.
Le brevet US-5472264 décrit un dispositif de freinage pour véhicule à motorisation électrique. Ce dispositif comprend trois moyens de freinage distincts et indépendants les uns des autres. Un premier moyen est réalisé par des freins à friction commandés par un maître cylindre hydraulique et agit sur les roues non motrices du véhicule, un deuxième moyen est un frein électrique permettant de récupérer de l'énergie lors des phases de freinage et un troisième moyen comprend un actionneur électrique agissant sur un autre maître cylindre hydraulique qui actionne des freins à friction. Les deuxième et troisième moyens de freinage sont commandés par l'enfoncement de la pédale de frein. Le problème que cherche à résoudre ce document est celui de la récupération de l'énergie de freinage. Il propose à cette fin d'adapter, lors des phases de freinage, la composante hydraulique de la force de freinage en fonction du comportement du moteur. Il n'est pas prévu dans ce document que le couple résultant de la combinaison des couples appliqués par le frein mécanique et le moteur électrique soit sensiblement linéaire et sensiblement proportionnel à l'enfoncement de la pédale de frein. De plus, la réalisation d'un tel dispositif est particulièrement coûteuse et compliquée car elle impose l'utilisation d'un frein hydraulique supplémentaire et d'un contrôleur afin de moduler l'énergie de freinage.
Le brevet US-6076899 décrit un dispositif de freinage pour véhicule à propulsion électrique. Ce dispositif comporte un calculateur coopérant avec le moteur électrique et avec un moyen de mesure de la position de l'accélérateur. Le calculateur est également relié à un capteur d'activation du frein afin de détecter un freinage d'urgence. Il n'est pas prévu non plus dans ce document de réguler le couple de freinage du moteur électrique en fonction de l'enfoncement de la pédale de frein et du couple de freinage des freins mécaniques afin d'obtenir un couple résultant linéaire.

L'invention a donc pour objet un dispositif de freinage d'un véhicule électrique, comportant au moins un moteur électrique réversible et un dispositif de freinage mécanique, un capteur de position de la pédale d'accélérateur, un capteur de position de la pédale de frein et un calculateur permettant de réguler le couple résistant appliqué par le moteur électrique en fonction de l'enfoncement de la pédale de frein et de l'enfoncement de la pédale d'accélération, caractérisé en ce que le calculateur régule le moteur électrique de manière à ce que le couple résultant de la combinaison des couples appliqués par le frein mécanique et le moteur électrique soit sensiblement linéaire et sensiblement proportionnel à l'enfoncement de la pédale de frein.

Selon une autre caractéristique de l'invention, le calculateur régule le couple résistant appliqué par le moteur électrique en fonction de la vitesse du véhicule.

Selon encore une autre caractéristique de l'invention, le couple résistant appliqué par le moteur électrique est du type proportionnel à l'enfoncement de la pédale de frein jusqu'à un certain seuil puis constant au-delà de ce seuil.

Selon une autre caractéristique de l'invention, le moteur électrique est alimenté par des batteries électriques et le couple résistant maximal appliqué par le moteur électrique correspond au couple nécessaire au rechargement des batteries électriques d'alimentation du moteur.

Selon une autre caractéristique de l'invention, le véhicule comporte au moins deux essieux, chacun étant entraîné par au moins un moteur électrique.

Selon une autre caractéristique de l'invention, le dispositif comporte des capteurs mesurant le chargement individuellement appliqué à chaque essieu.

Selon une caractéristique de l'invention, le calculateur régule individuellement le couple appliqué par chaque moteur électrique de manière à répartir le freinage en fonction du chargement par essieux.

Selon une caractéristique de l'invention le calculateur régule le couple appliqué par chaque moteur électrique de manière à répartir le freinage en fonction de la pression de gonflage et/ou de la température des pneumatiques.

Selon une caractéristique de l'invention, le dispositif comporte un dissipateur d'énergie permettant de dissiper rapidement une importante puissance électrique notamment lorsque les batteries capacitaires sont totalement rechargée et que l'on se trouve en phase de freinage ou lors d'un freinage d'urgence.

Un avantage du dispositif selon l'invention réside dans le fait qu'il permet d'obtenir une loi de freinage du véhicule linéaire, le freinage est ainsi proportionnel à la course de la pédale de frein.

D'autres caractéristiques, détails et avantages de l'invention ressortiront plus clairement de la description donnée ci-après à titre indicatif en relation avec des dessins dans lesquels :
- la figure 1 est une représentation schématique du dispositif selon l'invention,
- la figure 2 est un diagramme illustrant le couple de freinage en fonction de la course des pédales d'accélérateur et de frein, et
- la figure 3 est une vue agrandie de la partie centrale du diagramme représenté sur la figure 2.

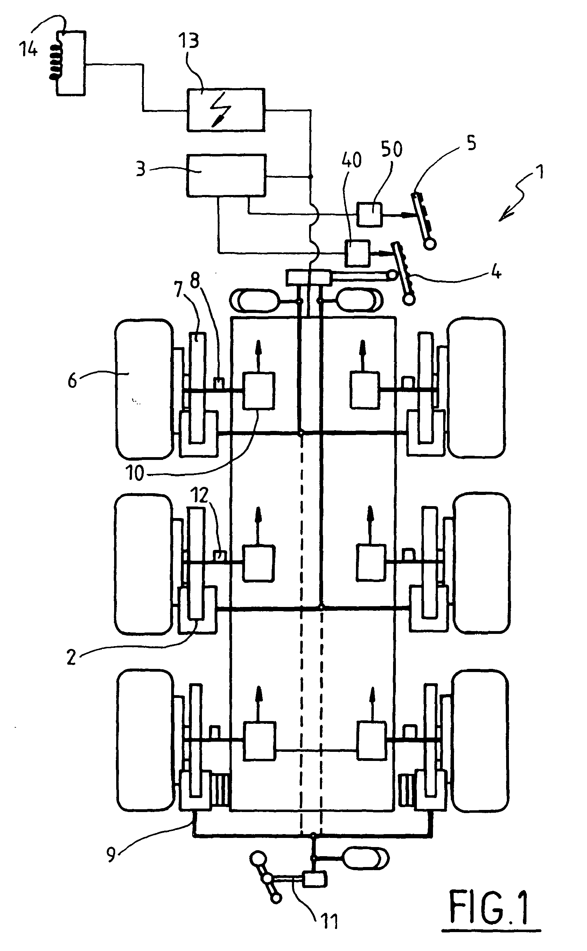

La figure 1 représente de manière schématique un véhicule électrique 1 équipé d'un dispositif de freinage selon l'invention. Le véhicule 1 est propulsé par des roues 6, chacune portée par un essieu 8 et entraînée par un moteur électrique 10. Chaque moteur électrique 10 est alimenté par des batteries capacitaires 13. Le véhicule 1 comporte un système de freinage mécanique 2, par exemple réalisé par des mâchoires 2 coopérant avec un disque 7 solidaire de l'essieu 8 de roue. On entend par freinage mécanique, et par opposition au freinage électrique intervenant au niveau du moteur électrique 10, tout mode de freinage pneumatique, hydraulique ou faisant intervenir des éléments mécaniques (mâchoires, patins, ...) sur les roues 6, leurs essieux 8 ou leurs supports, même lorsque ces éléments mécaniques sont commandés par un dispositif électronique ou électrique. Le système de freinage mécanique est actionné par le conducteur du véhicule au moyen d'une pédale 4 de frein. Un capteur 50 de position de la pédale 5 d'accélérateur et un capteur 40 de position de la pédale 4 de frein sont disposés de façon à mesurer la course de ces pédales. Les capteurs 40 et 50 sont reliés à un calculateur 3 qui peut modifier le couple résistant appliqué par le moteur électrique 10 en fonction de l'enfoncement de la pédale 4 de frein et de l'enfoncement de la pédale 5 d'accélération. Le véhicule 1 est également équipé d'un frein de stationnement 9, actionné par une commande 11 de frein de stationnement. Ce frein de stationnement peut indifféremment être installé sur l'un des essieux du véhicule sans interférer avec le dispositif décrit précédemment. Cependant, pour des raisons d'encombrement, le frein de stationnement sera préférentiellement disposé sur un essieu non équipé du dispositif de freinage selon l'invention.

Une variante de réalisation, lorsque le véhicule comporte plusieurs essieux, entraîné chacun par au moins un moteur électrique 10, consiste à équiper chaque essieu 8 d'un capteur de chargement 12 afin de connaître le chargement par essieu. Ainsi, le calculateur 3 peut réguler le couple appliqué par chaque moteur 10 en fonction du chargement par essieu 8.

On pourra dimensionner le frein mécanique de sorte à ce qu'il assure à lui tout seul le freinage du véhicule en cas de défaillance du frein électrique. On pourra également munir le dispositif d'un dissipateur d'énergie 14 (par exemple une résistance électrique) permettant de dissiper rapidement une importante puissance électrique. Un tel dissipateur permet notamment de dissiper l'énergie électrique lorsque les batteries capacitaires 13 sont totalement rechargée et que l'on se trouve en phase de freinage. Ce dissipateur 14 peut également être utilisé lors d'un freinage d'urgence (par exemple lorsque la pédale de frein est brutalement et totalement enfoncée), lorsque l'on a besoin de générer un important couple électrique de freinage.

Cet exemple de réalisation de l'invention illustre un mode préféré de réalisation mais d'autres modes de réalisation demeurent envisageables. On pourra par exemple réaliser l'invention sur un véhicule comporte un unique moteur électrique pour tous les essieux, un moteur électrique pour chaque roue, un moteur électrique pour chaque essieu ou pour plusieurs essieux. Ce dispositif s'applique quel que soit le nombre d'essieux du véhicule.

Le calculateur 3 peut également être programmé afin de réguler le freinage électrique en fonction de la vitesse du véhicule, de la pression de gonflage des pneumatiques, de la température des pneumatiques, du blocage des roues, ou de tout autre paramètre susceptible d'influencer le comportement du véhicule en phase de freinage.

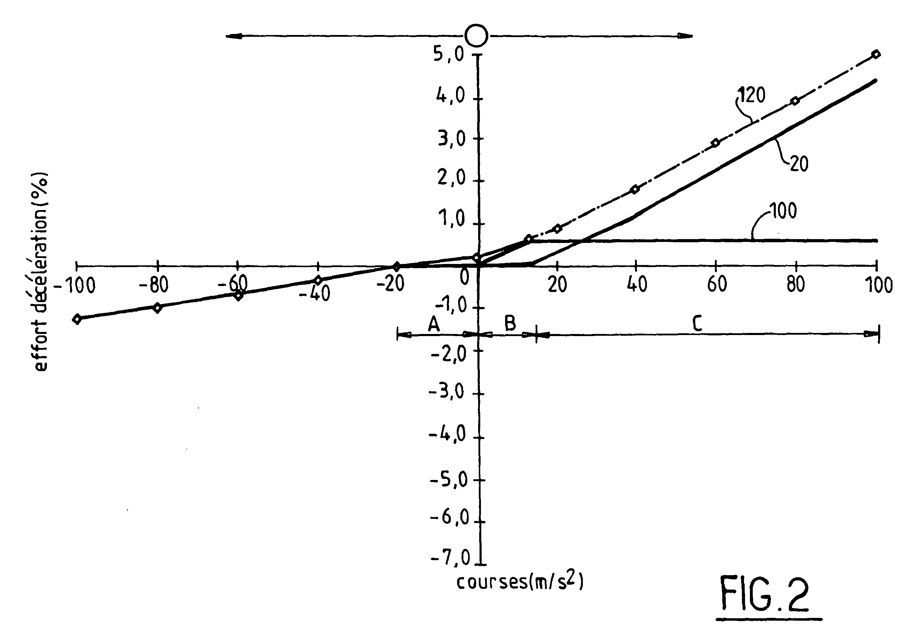

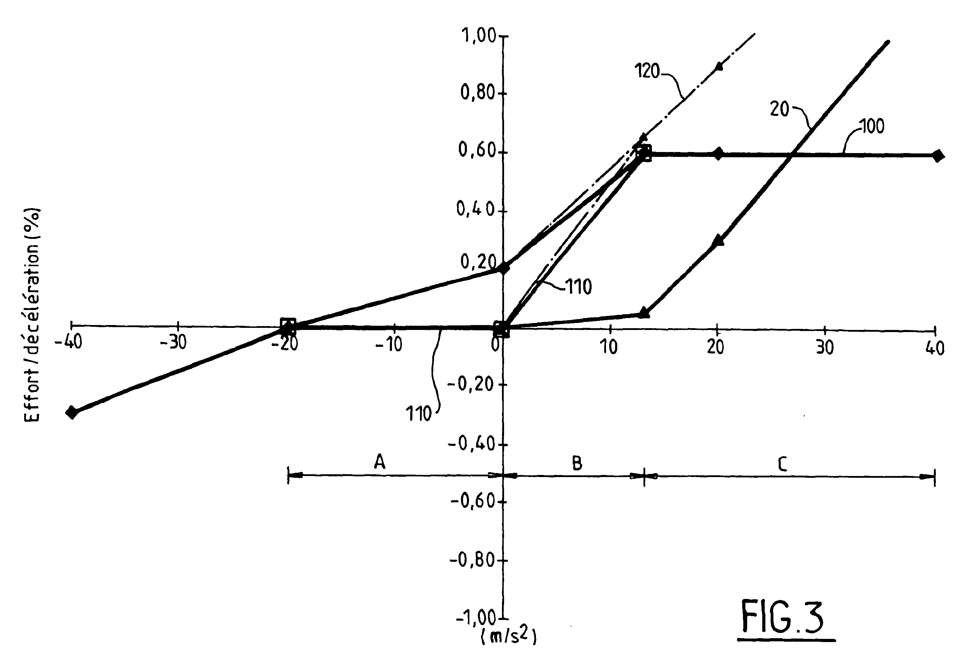

Les figures 2 et 3 représentent un diagramme des lois de freinage en fonction de la course des pédales d'accélérateur et de frein. Sur ces figures, la courbe 20 correspond au couple appliqué par le frein mécanique 2 en fonction de la course de la pédale de frein 40. La courbe 100 correspond au couple appliqué par le moteur 10, pour une vitesse donnée et en fonction de la course de la pédale d'accélération (pour la partie négative de l'axe des abscisses) ou de la pédale de frein de frein 40 (pour la partie positive de l'axe des abscisses), et la courbe 120 est la résultante des deux couples en fonction de la course de la pédale de frein 40.

Le dispositif de freinage mécanique 2 n'applique pas un couple linéaire à la roue 6 mais un couple qui se décompose en trois temps : dans un premier temps A correspondant à un relâchement de la pédale d'accélérateur, le moteur électrique 10 cesse d'entraîner les roues et exerce un faible couple de freinage correspondant au frein moteur lorsque la vitesse de rotation du moteur est inférieure à la vitesse de rotation des roues; dans un second temps B correspondant à un enfoncement nul de la pédale d'accélérateur et à une faible course de la pédale de frein 4, le frein mécanique 2 est quasiment inopérant, le couple de frein mécanique est donc sensiblement nul et le couple de frein électrique (courbe 100) est proportionnel à la course de la pédale de frein; et pour un enfoncement C beaucoup plus franc de la pédale, le couple de frein mécanique (courbe 20) évolue sensiblement linéairement et proportionnellement en fonction de la course de la pédale 4 alors que le couple de frein électrique demeure constant.

L'énergie récupérée lors du freinage électrique peut avantageusement être récupérée pour recharger les batteries capacitaires. Il est donc nécessaire de limiter le couple de frein électrique afin de ne pas générer de puissance électrique supérieure à celle admissible par les batteries capacitaires.

Sur la figure 3, la courbe 110 correspond au couple appliqué par le moteur 10, lorsque la vitesse du véhicule est faible (inférieure à 4km/h). Dans une telle configuration de déplacement à faible vitesse, lors du relâchement de la pédale d'accélérateur, le moteur électrique ne simule plus un frein moteur mais une situation de débrayage. Le couple de freinage est alors nul jusqu'à ce que l'utilisateur appuie sur la pédale de frein. Le couple de freinage est alors proportionnel à la course de la pédale de frein, jusqu'à atteindre son seuil maximal où il reste constant.

Le calculateur 3 permet ainsi de réguler le couple résistant appliqué par le moteur électrique 10 en fonction de l'enfoncement de la pédale 4 de frein et de l'enfoncement de la pédale 5 d'accélération. Le couple de freinage résultant 120 est donc sensiblement linéaire et proportionnel à la course de la pédale 4 de frein.

## Revendications

1. Dispositif de freinage d'un véhicule électrique (1), comportant au moins un moteur électrique (10) réversible et un dispositif de freinage mécanique (2), un capteur (50) de position de la pédale (5) d'accélérateur, un capteur (40) de position de la pédale (4) de frein et un calculateur (3) permettant de réguler le couple résistant appliqué par le moteur électrique (10) en fonction de l'enfoncement de la pédale (4) de frein et de l'enfoncement de la pédale (5) d'accélération, **caractérisé en ce que** le calculateur (3) régule le moteur électrique (10) de manière à ce que le couple résultant de la combinaison des couples appliqués par le frein mécanique (2) et le moteur électrique (10) soit sensiblement linéaire et sensiblement proportionnel à l'enfoncement de la pédale (4) de frein.

2. Dispositif de freinage d'un véhicule électrique (1) selon la revendication 1, **caractérisé en ce que** le calculateur (3) régule le couple résistant appliqué par le moteur électrique (10) en fonction de la vitesse du véhicule.

3. Dispositif de freinage d'un véhicule électrique selon la revendication 2, **caractérisé en ce que** le couple résistant appliqué par le moteur électrique (10) est du type proportionnel à l'enfoncement de la pédale (4) de frein jusqu'à un certain seuil puis constant au-delà de ce seuil.

4. Dispositif de freinage d'un véhicule électrique selon la revendication 3, **caractérisé en ce que** le moteur électrique (10) est alimenté par des batteries électriques (13) et **en ce que** le couple résistant maximal appliqué par le moteur électrique (10) correspond au couple nécessaire au rechargement des batteries électriques (13) d'alimentation du moteur (10).

5. Dispositif de freinage d'un véhicule électrique selon l'une des revendications 1 à 4, **caractérisé en ce que** le véhicule comporte au moins deux essieux (8), chacun étant entraîné par au moins un moteur électrique.

6. Dispositif de freinage d'un véhicule électrique selon la revendication 5, **caractérisé en ce qu'**il comporte des capteurs (12) mesurant le chargement individuellement appliqué à chaque essieu.

7. Dispositif de freinage d'un véhicule électrique selon la revendication 5 ou 6, **caractérisé en ce que** le calculateur (3) régule individuellement le couple appliqué par chaque moteur électrique (10) de manière à répartir le freinage en fonction du chargement par essieux.

8. Dispositif de freinage d'un véhicule électrique selon l'une des revendications précédentes, **caractérisé en ce que** le calculateur (3) régule le couple appliqué par chaque moteur électrique (10) de manière à répartir le freinage en fonction de la pression de gonflage et/ou de la température des pneumatiques.

9. Dispositif de freinage d'un véhicule électrique selon l'une des revendications précédentes, **caractérisé en ce qu'**il comporte un dissipateur d'énergie (14) permettant de dissiper rapidement une importante puissance électrique notamment lorsque les batteries capacitaires (13) sont totalement rechargée et que l'on se trouve en phase de freinage ou lors d'un freinage d'urgence.

## Claims

1. A braking device for an electric vehicle (1), incorporating at least one reversible electric engine (10) and one mechanical braking device (3), a position sensor (50) for the accelerator pedal (5), a position sensor (40) for the brake pedal (4) and a calculator (3) to regulate the resisting torque applied by the electric engine (10) according to the depression of the brake pedal (4) and the depression of the accelerator pedal (5), ***wherein*** the calculator (5) regulates the electric motor (10) so that the resulting torque of the combination of torques applied by the mechanical braking (2) and the electric engine (10) is substantially linear and substantially proportional to the depression of the brake pedal (4).

2. A braking device for an electric vehicle (1) according to Claim 1, wherein the calculator (3) regulates the resisting torque applied by the electric engine (10) according to the vehicle's speed.

3. A braking device for an electric vehicle according to Claim 2, wherein the resisting torque applied by the electric engine (10) is of the type that is proportional to the depression of the brake pedal (4) up to a certain threshold and then constant beyond such threshold.

4. A braking device for an electric vehicle according to Claim 3, wherein the electric engine (10) is supplied by electric batteries (13) and the maximal resisting torque applied by the electric engine (10) corresponds to the torque required to charge the electric batteries (13) which supply the engine (10).

5. A braking device for an electric vehicle according to one of Claims 1 to 4, wherein the vehicle incorporates at least two axles (8), each of which is driven by at least one electric engine.

6. A braking device for an electric vehicle according to Claim 5, wherein it incorporates sensors (12) to measure the individual load applied to each axle.

7. A braking device for an electric vehicle according to Claim 5 or 6, wherein the calculator (3) individually regulates the torque applied by each electric engine (10) so as to spread the braking according to the load per axle.

8. A braking device for an electric vehicle according to one of the above Claims, wherein the calculator (3) regulates the torque applied by each electric engine (10) so as to spread the braking according to the inflation pressure and/or temperature of the tyres.

9. A braking device for an electric vehicle according to one of the above Claims, wherein it incorporates an energy dissipater (14) enabling substantial electric power to be dissipated rapidly namely when the capacitor batteries (13) are fully recharged and when the vehicle is in the braking phase or during emergency braking.

## Patentansprüche

1. Vorrichtung zum Abbremsen eines elektrischen Fahrzeugs (1), umfassend wenigstens einen reversiblen, elektrischen Motor (10) und eine mechanische Bremsvorrichtung (2), einen Positionssensor (50) des Gaspedals (5), einen Positionssensor (40) des Bremspedals (4) und einen Rechner (3), der es ermöglicht, das durch den elektrischen Motor (10) aufgebrachte Widerstandsmoment in Abhängigkeit vom Durchtreten des Bremspedals (4) und vom Durchtreten des Gaspedals (5) zu regeln, ***dadurch gekennzeichnet, dass*** der Rechner (3) den elektrischen Motor (10) derartig regelt, dass das sich aus der Kombination aus durch die mechanische Bremse (2) und den elektrischen Motor (10) aufgebrachten Momente ergebende Moment im Wesentlichen linear und im Wesentlichen proportional zum Durchtreten des Bremspedals (4) ist.

2. Vorrichtung zum Abbremsen eines elektrischen Fahrzeugs (1) nach Anspruch 1, **dadurch gekennzeichnet, dass** der Rechner (3) das von dem elektrischen Motor (10) aufgebrachte Widerstandsmoment in Abhängigkeit von der Geschwindigkeit des Fahrzeugs regelt.

3. Vorrichtung zum Abbremsen eines elektrischen Fahrzeugs nach Anspruch 2, **dadurch gekennzeichnet, dass** das von dem elektrischen Motor (10) aufgebrachte Widerstandsmoment von der Art ist, dass es bis zu einer bestimmten Schwelle proportional zum Durchtreten des Bremspedals (4) und dann über diese Schwelle hinaus konstant ist.

4. Vorrichtung zum Abbremsen eines elektrischen Fahrzeugs nach Anspruch 3, **dadurch gekennzeichnet, dass** der elektrische Motor (10) von elektrischen Batterien (13) versorgt wird und dass das durch den elektrischen Motor (10) aufgebrachte maximale Widerstandsmoment dem notwendigen Moment zum Laden der elektrischen Batterien (13) zur Versorgung des Motors (10) entspricht.

5. Vorrichtung zum Abbremsen eines elektrischen Fahrzeugs nach einem der Ansprüche 1 bis 4, **dadurch gekennzeichnet, dass** das Fahrzeug wenigstens zwei Achsen (8) umfasst, wobei jede von wenigstens einem elektrischen Motor angetrieben wird.

6. Vorrichtung zum Abbremsen eines elektrischen Fahrzeugs nach Anspruch 5, **dadurch gekennzeichnet, dass** sie Sensoren (12) umfasst, welche die auf jede Achse individuell aufgebrachte Belastung messen.

7. Vorrichtung zum Abbremsen eines elektrischen Fahrzeugs nach Anspruch 5 oder 6, **dadurch gekennzeichnet, dass** der Rechner (3) das durch jeden elektrischen Motor (10) aufgebrachte Moment individuell derartig regelt, dass das Abbremsen in Abhängigkeit von der Belastung pro Achse verteilt wird.

8. Vorrichtung zum Abbremsen eines elektrischen Fahrzeugs nach einem der vorhergehenden Ansprüche, **dadurch gekennzeichnet, dass** der Rechner (3) das durch jeden elektrischen Motor (10) aufgebrachte Moment derartig regelt, dass das Abbremsen in Abhängigkeit des Reifendrucks und/oder der Temperatur der Reifen verteilt wird.

9. Vorrichtung zum Abbremsen eines elektrischen Fahrzeugs nach einem der vorhergehenden Ansprüche, **dadurch gekennzeichnet, dass** sie einen Energievernichter (14) umfasst, der es ermöglicht, eine große elektrische Leistung zu vernichten, insbesondere wenn die kapazitiven Batterien (13) vollständig geladen sind und wenn man sich in Bremsphase oder bei einer Notbremsung befindet.
